# EUROPÄISCHE PATENTSCHRIFT

(11) **EP 0 363 447 B1**
(45) Veröffentlichungstag und Bekanntmachung des Hinweises auf die Patenterteilung: **18.08.1993**
(21) Anmeldenummer: 89901451.8
(22) Anmeldetag: 23.01.1989
(51) Int. Cl.: C12G 3/08

(54) **VERFAHREN ZUR HERSTELLUNG ENTALKOHOLISIERTER GETRÄNKE SOWIE ANLAGE UND EINRICHTUNG ZUR DURCHFÜHRUNG DES VERFAHRENS**
PROCESS AND DEVICE FOR MANUFACTURING DEALCOHOLIZED BEVERAGES
PROCEDE POUR FABRIQUER DES BOISSONS DESALCOOLISEES AINSI QU'INSTALLATION ET DISPOSITIF POUR LA MISE EN OEUVRE DU PROCEDE

(30) Priorität: 27.01.1988 CH 284/88
(43) Veröffentlichungstag der Anmeldung: 18.04.1990
(73) Patentinhaber: BUCHER-GUYER AG Maschinenfabrik, CH-8166 Niederweningen (CH)
(72) Erfinder: GRESCH, Walter, CH-8166 Niederweningen (CH)
(86) Internationale Anmeldenummer: CH8900012
(87) Internationale Veröffentlichungsnummer: WO8907132

(56) Entgegenhaltungen:
- EP-A- 0 194 043
- EP-A- 0 213 220
- WO-A-85/01064
- Chemical Abstracts, vol. 106, no. 5, February 1987, see page 406, abstract no. 31354e, & Am. J. Enol.Vitic. 1986, 37(4), 297-300
- Biotechnology & Bioengineering, vol. 26, no.7, July 1984, pages 771-779, see abstract

## Beschreibung

Die Erfindung betrifft ein Verfahren zur Herstellung entalkoholisierter Getränke durch Fermentation und Entalkoholisierung eines aus Obst-, Frucht- oder Beerensaft, zuckerreduziertem Saft, Traubenmost oder Bier- Würze bestehenden Substrates.

Bei den entalkoholisierten Getränken unterscheidet man zwischen alkoholfreien (Alkoholgehalt ≦ 0,5 Vol.%), alkoholarmen (≦ 1,5 Vol.%) und alkoholreduzierten Getränken. Dabei sollen die charakteristischen Geschmacksstoffe des entsprechenden alkoholischen Getränkes, beispielsweise Wein oder Bier, im entalkoholisierten Getränk möglichst unverändert erhalten bleiben.

Zur Herstellung von entalkoholisiertem Wein ist es bekannt, dem aus der normalen Produktion stammenden alkoholischen Wein durch verschiedene Entalkoholisierungs- Verfahren nachträglich den Alkohol wieder zu entziehen. Dabei werden für die Herstellung des alkoholischen Weines Fermentationsverfahren angewendet, die praktisch alle chargenweise laufen und bei denen der Alkohol durch Fermentation (Gärung) entsteht.

Das gleiche gilt auch für die Herstellung von alkoholfreiem Bier. Der bei der normalen Produktion durch die Gärung entstandene Alkohol wird nachträglich wieder ganz oder teilweise aus dem Bier entfernt. Um den Alkohol- Gehalt des Bieres schon während der Produktion zu reduzieren, kann dabei der Gärungsprozess unterbrochen und das Bier frühzeitiger aus dem Gärungsbehälter, dem sogenannten Fermenter, entnommen werden.

Es sind auch bereits verfahren bekannt, bei denen zur Herstellung von entalkoholisierten Getränken das Substrat der Einwirkung von Mikroorganismen ausgesetzt wird, so dass bei der Fermentation nur wenig oder gar kein Alkohol entsteht. Nach der EP-OS 0213220 werden hierzu die Mikroorganismen, beispielsweise Hefe, auf einem speziellen Trägermaterial fixiert. Das Trägermaterial, das aus Kieselgur bestehen kann, befindet sich in einem als Kieselguranschwemmfilter ausgebildeten Reaktor, in den das Substrat eingeleitet wird. Es handelt sich dabei um ein Festbett-Verfahren, bei dem das Substrat durch den Kieselguranschwemmfilter hindurchgepumpt wird. Dabei besteht jedoch die Gefahr, dass der Filter nach einer gewissen Zeit verstopft und somit ein kontinuierlicher Betrieb erschwert wird. Ausserdem erreicht das auf diese Weise entalkoholisierte Bier nicht die Qualität des nachträglich entalkoholisierten Bieres.

Das gleiche gilt auch für ein weiteres, bekanntes Verfahren zur Herstellung von entalkoholisiertem Bier. Hierbei werden bei der Fermentation Mikroorganismen verwendet, die keine Maltose vergären. Dies bedeutet, dass der in der Maltose enthaltene Zucker nicht in Alkohol umgesetzt wird und somit das Endprodukt weniger Alkohol aufweist.

Durch die GB-PS 1406506 ist es ferner bekannt, zur Beschleunigung der Fermentation bei der Herstellung von alkoholischen Getränken das Substrat unter Druck durch ein Rückhaltefilter hindurchzuleiten, auf dem die Mikroorganismen in fester Position angeordnet sind. Dabei kann die Fermentation durch Aenderung der Druck- und Temperaturverhältnisse beeinflusst werden. Um ein alkoholfreies Getränk zu erhalten, muss dem auf diese Weise hergestellten Getränk der Alkohol nachträglich wieder entzogen werden.

Die bekannten Fermentationsverfahren zur Herstellung von Wein oder Bier laufen praktisch alle chargenweise. Bei der Herstellung von Wein dauert die Fermentation im allgemeinen 3 bis 6 Wochen. Während dieser Zeit muss der Gärungsprozess ständig überwacht werden. Die Arbeitskosten für die lange, chargenweise Verarbeitung, die einer Automation nur schwer zugänglich ist, sind entsprechend hoch. Es entstehen hohe Investitionskosten für die Tank-Kapazität und Kapitalbindungskosten wegen der langen Zeit zwischen Rohmaterialeinkauf und Verkauf des Produkts. Ausserdem verteuert die Aufteilung in konventionelle Weinherstellung und nachträgliche Entalkoholisierung das Endprodukt zusätzlich durch zum Teil höhere Rohmaterialkosten, zusätzliche Lagerkosten und höhere Arbeitskosten. Auch hinsichtlich Produktionsqualität kann auf spezielle Bedürfnisse des später entstehenden entalkoholisierten Getränkes bei den bekannten Verfahren nicht eingegangen werden. Eine ähnliche Situation besteht auch in vermindertem Masse bei den bekannten Verfahren zur Herstellung von entalkoholisiertem Bier.

Der Erfindung liegt deshalb die Aufgabe zugrunde, ein Verfahren der eingangs erwähnten Art zu schaffen, das die genannten Nachteile vermeidet und die rationelle Herstellung eines entalkoholisierten, qualitativ guten Getränks bei relativ kurzer Prozessdauer und niedrigen Produktionskosten ermöglicht.

Gemäss der Erfindung wird diese Aufgabe dadurch gelöst, dass das Substrat in einer zusammenhängenden Produktlinie zuerst durch eine physikalische Behandlung von schädlichen Mikroorganismen befreit und anschliessend mittels getränkegerechter Mikroorganismen und wenigstens teilweisem Biomasse-Rückhalt mindestens teilweise fermentiert wird, darauf kontinuierlich oder semikontinuierlich mindestens teilweise entalkoholisiert und anschliessend einer weiteren Verarbeitung zugeführt wird.

Weitere vorteilhafte und zweckmässige Ausgestaltungen der Erfindung sind den Patentansprüchen zu entnehmen.

Die mit der Erfindung erzielten Vorteile bestehen insbesondere darin, dass durch die zusammenhängende Produktlinie von Fermentation und Entalkoholisierung sowie durch den kontinuierlichen Ablauf dieser Bearbeitungsstufen ein äusserst rationeller Betrieb ermöglicht wird. Durch den Biomasse-Rückhalt während der Fermentation wird die nachfolgende Entalkoholisierung, die in die Gesamtanlage integriert ist, wesentlich vereinfacht, weil das Fermentationsprodukt sauberer, das heisst weniger oder gar nicht mit Biomasse belastet ist. Da sich durch den Biomasse-Rückhalt die Konzentration der Biomasse im Reaktor vergrössert, wird auch die Produktivität der Anlage erhöht. Die erhöhte Konzentration der Mikroorganismen im Reaktor ist ausserdem die Voraussetzung für einen kontinuierlichen und damit wirtschaftlichen Betrieb der Anlage.

Die Erfindung ist in der folgenden Beschreibung und der Zeichnung, die zwei Ausführungsbeispiele darstellt, näher erläutert. Es zeigen:
- Fig. 1: eine schematische Darstellung der erfindungsgemässen Anlage,
- Fig. 2: eine schematische Darstellung einer erweiterten Ausführungsform der Anlage nach Fig. 1 und
- Fig. 3: einen Längsschnitt durch den Turmfermenter gemäss der Anlage nach Fig. 1 und 2.

Das aus Obst, Trauben, Früchte, Beeren oder Malz und Hopfen bestehende Rohmaterial wird in einer Aufbereitungsstufe 1 zu einem Substrat aus Traubenmost, Fruchtsaft, Beerensaft oder Bier-Würze verarbeitet. Die Gewinnung des Substrates kann mittels konventioneller Methoden, z.B. durch den Einsatz von Pressen oder auch mittels Verflüssigungstechnologien erfolgen. Das Substrat, aus dem später der entalkoholisierte Wein oder das entalkoholisierte Bier gewonnen wird, enthält eine Vielzahl schädlicher Mikroorganismen und Trubstoffe, die vor dem Gärungsprozess unschädlich gemacht oder entfernt werden müssen. Das Vorklären und Entkeimen des Substrates erfolgt kontinuierlich in einer Mikrofiltrationseinrichtung 2, die zwischen der Aufbereitungsstufe 1 und einem Turmfermenter 3, in dem der Gärungsprozess abläuft, angeordnet ist. Das Retentat der Mikrofiltrationseinrichtung 2, das schädliche Mikroorganismen und Trubstoffe enthält, wird über eine Leitung 4 aus der in einer zusammenhängenden Produktlinie kontinuierlich arbeitenden Anlage abgeführt. Auf diese Weise wird ein sauberes Substrat gewonnen, das zu einem störungsfreien Betrieb der nachfolgenden, kontinuierlichen Fermentation und auch zu einer Qualitätsverbesserung des Endproduktes führt. Die kurzen Verweilzeiten für das Klären und Entkeimen des Substrates in der Mikrofiltrationseinrichtung 2 und der kontinuierliche Durchlauf begünstigen die Rationalisierung des gesamten Herstellungsprozesses. Ausserdem wird durch das Kaltverfahren der Mikrofiltration die bei der üblichen Sterilisation durch Erhitzen entstehende schädliche Wärmebelastung des Substrates vermieden.

In bestimmten Fällen ist es zweckmässig, der Mikrofiltrationseinrichtung 2 eine Vorbehandlungsstufe 5 vorzuschalten. So wird z.B. in der Vorbehandlungsstufe 5 eine Wärmebehanldung, beispielsweise durch Hoch/Kurz-Erhitzung, zur Gewinnung von Farbe bei Rotwein durchgeführt. Zur Erhöhung der Fermenterproduktivität kann auch bereits eine Vorvergärung des Substrates in der Vorbehandlungsstufe 5 erfolgen. Die Vorvergärung kann auch vor der Aufbereitungseinrichtung 1 durch Fressen zur Gewinnung von Farb- und Gerbstoffen bei Rotwein durchgeführt werden. Eine weitere, vorteilhafte Möglichkeit zur Einwirkung auf das Substrat vor dem Gärungsprozess ist durch eine Glukose-Oxydase-Behandlung in der Vorbehandlungsstufe 5 gegeben. Hierbei wird die im Substrat enthaltene Glukose durch ein bekanntes Verfahren in Säure umgewandelt. Die Folge davon ist weniger Zucker im Substrat, so dass bei der nachfolgenden Fermentation auch weniger Alkohol entsteht und die Produktivität bei der Herstellung entalkoholisierter Getränke gesteigert wird. Ausserdem bedeutet die Glukose-Oxydase-Behandlung in vielen Fällen auch eine Qualitätsverbesserung des Endprodukts. In der Vorbehandlungsstufe 5 können auch noch andere Behandlungsverfahren zur Qualitätsverbesserung des Endprodukts hinsichtlich Aroma, Geruch, Farbe usw. durchgeführt werden. Zur Verbesserung der Wirtschaftlichkeit erfolgen alle Behandlungen in der Vorbehandlungsstufe 5 in einem kontinuierlich ablaufenden Prozess.

Nachdem das Substrat die Vorbehandlungsstufe 5 durchlauffen hat und in der Mikrofiltrationseinrichtung 2 vorgeklärt und entkeimt wurde, wird es über die Leitung 6 dem Turmfermenter 3 zugeführt. In der Leitung 6 ist ein Wärmeaustauscher 7 vorgesehen, der zur Aufwärmung oder Abkühlung des Substrates auf Fermentationstemperatur dient. Bevor das Substrat in den Turmfermenter 3 an dessen Unterseite eingeleitet wird, kann in einem kontinuierlichen Mischer 8 ein Säure-Abbau im Substrat durch Beimischung von Kalium- oder Kalzium-Karbonat erfolgen. Da die Zugabe zwischen Mikrofiltrationseinrichtung 2 und Turmfermenter 3 erfolgt, werden Poren-Verstopfungen in der Mikrofiltrationseinrichtung 2 verhindert. Ein solcher Säure-Abbau ist unter Umständen notwendig, um den Ph-Wert im Turmfermenter 3 im Hinblick auf die Anwendung bestimmter Mikroorganismen, z.B. Zymomonas Mobilis, für die Fermentation etwas zu erhöhen.

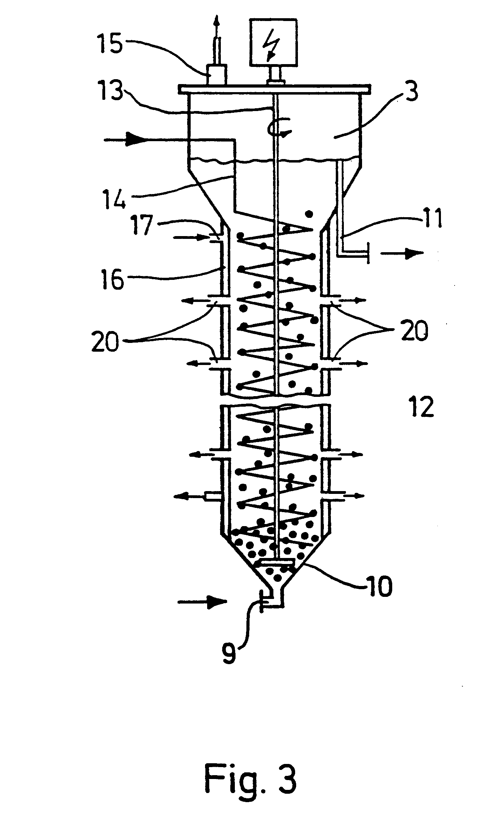

Das Substrat wird dem Turmfermenter 3 über eine Leitung 9 an seiner Unterseite 10 kontinuierlich zugeführt (Fig. 3). Während das Substrat den Turmfermenter 3 von unten nach oben durchläuft, wird es fermentiert und an der Oberseite über eine Leitung 11 als alkoholisches Getränk, z.B. Wein oder Bier, kontinuierlich abgeführt. Die Fermentation im Turmfermenter 3 erfolgt durch Mikroorganismen, die im Substrat in Schwebe gehalten werden und den Gärungsprozess bewirken. Es handelt sich dabei um getränkegerechte Mikroorganismen, die gesetzlich zugelassen sind und keine toxischen, resp. geschmacks- und geruchsstörende Nebenprodukte produzieren. Die Mikroorganismen bilden eine sich vermehrende Biomasse, die sich vom Substrat ernährt und mit diesem reagiert. Dabei werden neben Alkohol auch hochwertige, erwünschte Aroma- und Geschmacksstoffe produziert.

Die Mikroorganismen werden im Turmfermenter 3 vorzugsweise auf inertem, das heisst chemisch unter den vorliegenden Bedingungen nicht reaktionsfähigem Trägermaterial angesiedelt. Das Trägermaterial besteht aus Koks-, Sand-, Polymer- oder sonstigen Trägerpartikeln 12, die so gross gewählt sind, dass sie im Turmfermenter 3 vom durchströmenden Substrat in Schwebe gehalten werden, also weder nach unten absinken noch nach oben steigen. Die auf den Trägerpartikeln 12 immobilisierten, nach dem Fliessbett-Verfahren in Schwebe gehaltenen Zellen können auf diese Weise mit dem Fermentationsprodukt (Wein, Bier) nicht abgeführt werden und verbleiben somit im Turmfermenter 3. Dadurch ergibt sich ein wirkungsvoller Biomasse-Rückhalt, durch den spezielle teure Einrichtung zum Rückführen der Biomasse eingespart werden.

Das im Turmfermenter 3 mit der Biomasse vermischte Substrat wird durch ein Rührwerk 13 ständig in Bewegung gehalten. Ein in den Turmfermenter 3 eingeführter Silikonschlauch 14 sorgt für eine blasenfreie Belüftung des Fermenterinhalts. Die Versorgung mit steriler Luft ist hauptsächlich am Anfang für das Zellwachstum der Mikroorganismen und in geringem Masse während des Betriebes für den Ersatz von toten Zellen erforderlich. Die blasenfreie Belüftung hat den Vorteil, dass wenig Sauerstoff-Ueberschuss und damit weniger Aromaverluste entstehen und kein Schaum gebildet wird. Bei der Fermentation entstehen Alkohol und CO₂ als hauptsächliche Fermentationsprodukte. Der entstehende CO₂-Druck kann mit zur Steuerung der Fermentation dienen. Im Turmfermenter 3 herrscht während der Fermentation ein Ueberdruck von ca. 0,5 bis 6 bar. Ueberschüssige CO₂ und O₂ wird oben im Turmfermenter 3 durch eine Auslassöffnung 15 abgelassen. Das CO₂ ist wichtig für den entstehenden Wein, der bei höheren CO₂-Gehalt mehr und bei niedrigem CO₂-Gehalt weniger spritzig ist. Der Turmfermenter 3 besitzt ferner einen Kühlmantel 16, in welchen durch eine Zuführöffnung 17 Kühlflüssigkeit eingeleitet wird. Die Kühlung des Turmfermenters 3 dient zur Abführung der bei der Fermentation entstehenden Reaktionswärme.

Das Fliessbett-Verfahren mittels immobilisierter Mikroorganismen gemäss Fig. 3 ermöglicht extrem kurze Verweilzeiten von z.B. 1 bis 4 Stunden. Durch den besseren Stoffaustausch wird die Fermenter-Produktivität erhöht. Während bei der konventionellen Fermentation von Wein natürlicher Trub als Träger von Mikroorganismen erforderlich ist, damit die Fermentation gut anspringt, wird die Trägerfunktion des Trubes im erfindungsgemäss vorgeklärten und von schädlichen Mikroorganismen befreiten Substrat von den mit getränkegerechten Mikroorganismen versehenen Trägerpartikeln 12 übernommen. Infolge der Anordnung von Mikroorganismen auf künstlichen Trägern, lösen sich tote Zellen automatisch von den Trägerpartikeln 12 und können somit aus dem Turmfermenter 3 leicht ausgeschleust werden.

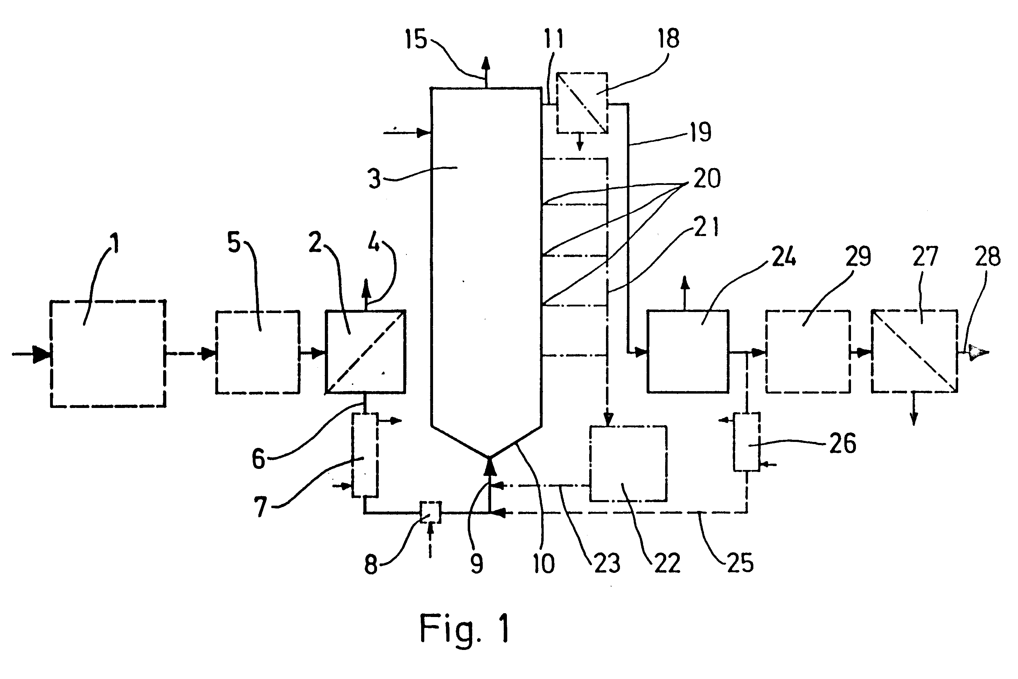

Zum Entfernen freier und/oder toter Zellen aus dem fermentierten Substrat ist dem Turmfermenter 3 eine Mikrofiltrationseinrichtung 18 nachgeschaltet (Fig. 1). Da durch die Leitung 11 abgeführte alkoholische Getränk wird in die Retentatseite der Mikrofiltrationseinrichtung 18 eingeleitet und verlässt im gereinigten Zustand die Permeatseite durch eine Leitung 19. Die freien und toten Zellen sowie eventuelle andere Rückstände werden mit dem Retentat abgeführt. Zum Ausschleusen ganzer Trägerpartikel 12 aus dem Fermenter 3 sind in der Wandung 16 des Turmfermenters 3 mehrere Auslassöffnungen 20 angeordnet. Die ausgeschleusten Trägerpartikel 12 werden über eine Sammelleitung 21 einer Regenerierungsstufe 22 zugeführt, in der die Trägerpartikel 12 unter sterilen Bedingungen von Mikroorganismen befreit und/oder erneuert werden und über eine Leitung 23 wieder in den Turmfermenter 3 zurückgeführt werden.

Durch das Ausschleusen freier und/oder toter Zellen oder ganzer Trägerpartikel 12 wird die Entstehung eines unerwünschten Nebengeschmackes im Getränk verhindert und somit die Qualität des Endproduktes verbessert. Ausserdem wird durch das Entfernen der toten Zellen die Fermenter-Produktivität erhalten. Freie Zellen können auch die Leistung der nachfolgenden Entalkoholisierung herabsetzen. Die Einrichtungen zur Entalkoholisierung können deshalb kleiner und kostengünstiger gebaut werden, wenn die freien Zellen nicht zusammen mit dem fermentierten Substrat der Entalkoholisierung zugeführt werden.

In der Regel genügt das Ausschleusen von Mikroorganismen aus dem Turmfermenter 3 durch die Mikrofiltrationseinrichtung 18. Das Ausschleusen ganzer Trägerpartikel 12 ist nur in bestimmten Fällen erforderlich. Die Anwendung beider Verfahren kann jedoch einzeln oder kombiniert erfolgen und ist nicht beschränkt auf das vorliegende Ausführungsbeispiel, sondern kann auch für andere Zwecke der Biotechnologie mit Vorteil eingesetzt werden.

Die Fermentation des Substrates kann dadurch beschleunigt werden, dass die auf den Trägerpartikeln 12 gebundenen Mikroorganismen statt aus Hefen aus Bakterien bestehen. Mit Bakterien lässt sich die Alkoholproduktion um das 2- bis 3-fache steigern. Dies gilt insbesondere für den Einsatz von Bakterien vom Stamme Zymomonas Mobilis. Vorzugsweise werden diese Bakterien für die Herstellung von sogenannten "Cooler"-Getränken verwendet, bei denen das Aroma nicht unbedingt dem alkoholischen Wein entsprechen muss. Ein anderes Aroma, das durch den Einsatz von Bakterien statt Hefen verursacht wird, stört in diesem Falle nicht, da die niedrigeren Herstellungskosten wichtiger sind. In verschiedenen Ländern ist allerdings die Zulassung dieser oder ähnlicher Bakterien-Art noch zu erwirken.

Die volumetrische Produktivität des Turmfermenters 3 kann in gewissen Fällen, z.B. bei Zymomonas Mobilis noch weiter gesteigert werden, wenn zusätzlich zu den Mikroorganismen durch Coimobilisierung auch gärfördernde Enzyme auf den Trägerpartikeln 12 gebunden sind. Ebenfalls kann z.B. die in der Vorbehandlungsstufe 5 vor der Fermentation erfolgte Glukose-Oxydase-Behandlung mit Vorteil auch direkt im Turmfermenter 3 durchgeführt werden. Hierzu werden Glukose-Oxydase-Enzyme zusätzlich zu den Mikroorganismen auf den Trägerpartikeln 12 gebunden und in den Turmfermenter 3 eingebracht. Der für die Reaktion notwendige Sauerstoff wird von aussen durch den Silikonschlauch 14 zugeführt und im Turmfermenter 3 blasenfrei verteilt. Da infolge der Glukose-Oxydase-Reaktion bei der Fermentation weniger Alkohol entsteht, muss auch bei der Entalkoholisierung weniger Alkohol abgeführt werden. Dies führt zu einer Verbesserung der Qualität des Endprodukts. Die Produktivität wird gesteigert, da die Glukose-Oxydase-Reaktion rascher verläuft, als die Fermentation. Ausserdem ist der apparative Aufwand gegenüber der Vorbehandlungsstufe 5 geringer. Die Behandlung durch trägergebundene Glukose-Oxydase-Enzyme im Turmfermenter 3 kann jedoch auch in Kombination mit der Vorbehandlungsstufe 5 durchgeführt werden.

Anstelle der trägergebundenen Immobilisation ist die Immobilisation der Zellen auch durch Agglomeratbildung, das heisst, ohne Träger möglich.

Nachdem das fermentierte Substrat in Form von leicht alkoholischem Rohsaft den Turmfermenter 3 und die Mikrofiltrationseinrichtung 18 verlassen hat, wird es über die Leitung 19 einer Entalkoholisierungs-Einrichtung 24 zugeführt. In der Entalkoholisierungs-Einrichtung 24 wird dem Rohsaft der Alkohol ganz oder teilweise entzogen. Dies geschieht vorzugsweise mittels Membranverfahren wie z.B. Umkehrosmose, Dialyse und andere, die gegenüber den konventionellen, thermischen Verfahren den Vorteil besitzen, dass dabei keine Wärmebehandlung erfolgt und damit eine qualitative Verbesserung im Zusammenhang mit einer nachfolgenden, kalten Weiterverarbeitung gegeben ist. Vorteilhaft ist auch, dass bei den Membranverfahren das während der Fermentation erzeugte CO₂ weitgehend im Saft verbleibt. Bei der Rückführung des entalkoholisierten Rohsaftes in den Turmfermenter 3, wie im folgenden Abschnitt erläutert, ergibt sich gegenüber den thermischen Verfahren, bei denen eine Abkühlung des entalkoholisierten Getränks auf Fermenter-Eingangstemperatur unbedingt erforderlich ist, ein weiterer Vorteil durch die damit verbundene Energieeinsparung.

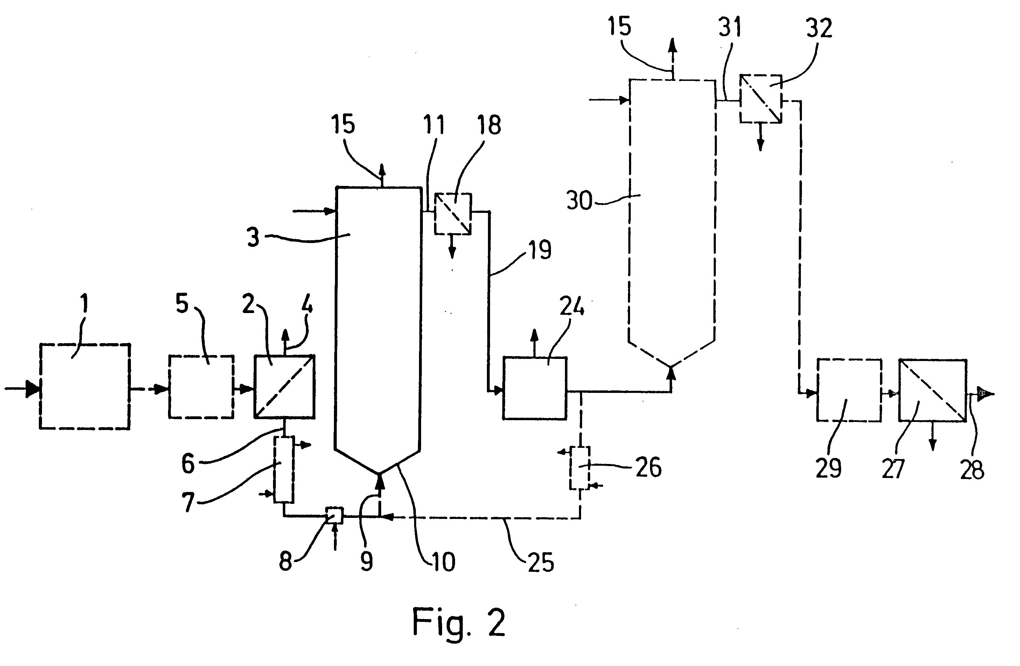

Wie aus Fig. 1 und 2 ersichtlich, wird der entalkoholisiezte Rohsaft nach dem Verlassen der Entalkoholisierungs-Einrichtung 24 über eine Leitung 25, die in die Leitung 9 mündet, wieder in den Turmfermenter 3 zurückgeführt. In der Leitung 9 ist ein Kühler 26 angeordnet, der dazu dient, den rückgeführten Rohsaft auf Fermentationstemperatur zu bringen. Da sich der rückgeführte, bereits fermentierte und entalkoholisierte Rohsaft mit dem noch nicht fermentierten Substrat vermischt, lässt sich die Alkoholkonzentration im Fermenter 3 herabsetzen auf z.B. 5-9 %, 11-12 % Gew. Vol. bei Wein. Die Folge davon ist, dass im Turmfermenter 3 bei höheren Temperaturen, z.B. 30 statt 20°C gearbeitet werden kann. Vorzugsweise liegt die maximale Temperatur im Fermenter über 25°C. Dadurch ergibt sich eine höhere Produktivität infolge kürzerer Verweilzeiten und eine einfachere Temperaturkontrolle. Andererseits wird eine bessere Qualität hinsichtlich Geschmack und Aroma erzielt, wenn von der Möglichkeit der Temperaturerhöhung kein Gebrauch gemacht wird.

Mit der Rückführung lassen sich auch konzentrierte Substrate, d.h. Substrate mit einem erhöhten Zuckergehalt fermentieren. Dies führt besonders beim Obstwein zu Qualitätsverbesserungen. Daneben ist zum Teil auch eine Verkleinerung des Fermentervolumens und damit eine Kosteneinsparung möglich. Die Rückführung des entalkohlisierten Rohsaftes in den Turmfermenter 3 und die damit verbundenen Vorteile werden in erster Linie dadurch ermöglicht, dass die Anlage erfindungsgemäss als zusammenhängende Produktlinie ausgeführt ist. Durch Steuerung und Rückführung lässt sich die Alkoholkonzentration im Fermenter auf einen bevorzugten Bereich von 40-80 % der Alkoholkonzentration ohne Rohsaft-Rückführung einstellen.

Nach der Entalkoholisierung des Rohsaftes in der Entalkohlisierungs-Einrichtung 24 erfolgt als weiterverarbeitende Stufe die Klärung des Rohsaftes vorzugsweise in einer Mikro- oder Ultrafiltrationseinrichtung 27. Ueber eine Leitung 28 wird der entalkohlisierte und geklärte Rohsaft als fertiges, alkoholarmes oder alkoholfreies Getränk abgeführt. Die in der Mikro- oder Ultrafiltrationseinrichtung 27 stattfindende Kaltbehandlung des Rohsaftes, die als kontinuierlicher oder semikontinuierlicher Prozess in einem Temperaturbereich von ca. 18 bis 55°C abläuft, wirkt sich auf die Qualität des Endproduktes günstig aus. Eine Vorbehandlung des Rohsaftes ist bei diesen Klärverfahren im allgemeinen nicht oder nur in geringem Umfang erforderlich.

Als weiterverarbeitende Stufe nach der Entalkoholisierung kann zwischen der Entalkoholisierungs-Einrichtung 24 und der Mikro- oder Ultrafiltrationseinrichtung 27 eine Nachbehandlungsstufe 29 vorgesehen werden. In der Nachbehandlungsstufe 29 wird der Rohsaft in bekannter Weise einer Vorschönung vor dem Klären unterzogen. Die Nachbehandlungsstufe 29 kann auch zum Säureabbau, zur Weinsteinentfernung, zur Säuerung etc. eingesetzt werden.

Im Ausführungsbeispiel nach Fig. 2 ist im Rahmen der Weiterverarbeitung nach der Entalkoholisierung eine weitere Fermentationsstufe in Form eines zweiten Turmfermenters 30 vorgesehen, der sich an die Entalkoholisierungs-Einrichtung 24 anschliesst. In diesem Falle wird im ersten Turmfermenter 3 nur teilweise fermentiert. Am Ausgang 31 des Turmfermenters 30 ist wie im Ausführungsbeispiel nach Fig. 1 eine Mikrofiltrationseinrichtung 32 zum Ausschleusen freier oder toter Mikroorganismen vorgesehen. Danach wird der alkoholreduzierte Rohsaft der Nachbehandlungsstufe 29 und der Ultra- oder Mikrofiltrationseinrichtung 27 zum Klären zugeführt. Der Einsatz eines zweiten Fermenters dient vor allem zur Herstellung qualitativ verbesserter Getränke, die lediglich alkoholreduziert sind. Der zweite Turmfermenter 30 kann in seinem Aufbau identisch sein mit dem ersten Turmfermenter 3. Es ist jedoch auch denkbar, dass der Fermenter 30 nach herkömmlichen Verfahren arbeitet.

Das vorliegende Verfahren gemäss der Erfindung eignet sich besonders zur Herstellung von entalkoholisiertem "Billig-Wein" oder "Coolern", d.h. mit Fruchtsaft verschnittenen Getränken, die wenig Alkohol enthalten, kalorienarm sind und im allgemeinen nicht oder nur wenig süss sind. Diese, nach dem erfindungsgemässen Verfahren hergestellten Getränke sind im Vergleich zum alkoholischen Getränk wesentlich billiger und somit preislich wettbewerbsfähig zu den herkömmlichen, alkoholfreien Getränken. Das erfindungsgemässe Verfahren kann aber auch für die Herstellung gewisser entalkoholisierter Biere verwendet werden.

## Patentansprüche

1. Verfahren zur Herstellung entalkoholisierter Getränke durch Fermentation und Entalkoholisierung eines aus Obst-, Frucht- oder Beerensaft, zuckerreduziertem Saft, Traubenmost oder Bier-Würze bestehenden Substrates, **dadurch** gekennzeichnet, dass das Substrat in einer zusammenhängenden Produktlinie zuerst durch eine physikalische Behandlung von schädlichen Mikroorganismen befreit und anschliessend mittels getränkegerechter Mikroorganismen und Biomasse-Rückhalt fermentiert wird, darauf kontinuierlich mindestens teilweise entalkoholisiert und anschliessend einer weiteren Verarbeitung zugeführt wird, wobei der gesamte Prozess kontinuierlich verläuft und die Fermentation mittels immobilisierter Mikroorganismen in einem nach dem Fliessbett-Verfahren arbeitenden Fermenter erfolgt.

2. Verfahren nach Anspruch 1, **dadurch** gekennzeichnet, dass das Substrat mittels einer semikontinuierlich betriebenen Entalkoholisierungsstufe mindestens teilweise entalkoholisiert wird.

3. Verfahren nach Anspruch 1 oder 2, **dadurch** gekennzeichnet, dass das Substrat vor der Fermentation geklärt wird.

4. Verfahren nach einem der Ansprüche 1 bis 3, **dadurch** gekennzeichnet, dass das Substrat vor der Fermentation mittels Mikrofiltration geklärt und sterilisiert wird.

5. Verfahren nach einem der Ansprüche 1 bis 4, **dadurch** gekennzeichnet, dass das Substrat vor dem Klären einer Vorbehandlung unterzogen wird.

6. Verfahren nach Anspruch 5, **dadurch** gekennzeichnet, dass die Vorbehandlung aus einer Glukose-Oxydase-Behandlung besteht.

7. Verfahren nach einem der Ansprüche 1 bis 6, **dadurch** gekennzeichnet, dass der Biomasse-Rückhalt bei der Fermentation durch Immobilisierung von Mikrooganismen erfolgt, die auf inertem Trägermaterial gebunden sind.

8. Verfahren nach Anspruch 7**, dadurch** gekennzeichnet, dass das Trägermaterial für die Mikroorganismen aus Koks, Sand oder Polymer besteht.

9. Verfahren nach einem der Ansprüche 1 bis 8, **dadurch** gekennzeichnet, dass freie, d.h. nicht trägergebundene und tote Mikroorganismen aus dem Fermenter ausgeschleust werden.

10. Verfahren nach Anspruch 9, **dadurch** gekennzeichnet, dass die ausgeschleusten freien und toten Mikroorganismen mittels Mikrofiltration aus dem Produktstrom abgetrennt werden.

11. Verfahren, insbesondere nach einem der Ansprüche 1 bis 10, **dadurch** gekennzeichnet, dass die Mikroorganismen zusammen mit Trägermaterial aus dem Fermenter ausgeschleust, Trägermaterial von Mikroorganismen befreit und wieder in den Fermenter zurückgeführt wird.

12. Verfahren nach einem der Ansprüche 1 bis 11**, dadurch** gekennzeichnet, dass auf dem Trägermaterial Hefen und/oder Bakterien gebunden sind.

13. Verfahren nach Anspruch 12, **dadurch** gekennzeichnet, dass Bakterien vom Stamme Zymomonas Mobilis eingesetzt werden.

14. Verfahren nach einem der Ansprüche 1 bis 13, **dadurch** gekennzeichnet, dass auf dem Trägermaterial zusätzlich zu den Mikroorganismen Enzyme gebunden sind.

15. Verfahren nach Anspruch 14, **dadurch** gekennzeichnet, dass die trägergebundenen Enzyme aus Glukose-Oxydase-Enzymen bestehen.

16. Verfahren nach einem der Ansprüche 1 bis 15, **dadurch** gekennzeichnet, dass dem Substrat zum Abbau der Säure zwischen Vorklärung und Fermentation eine Kalzium-Karbonat- oder Kalium-Karbonat-Lösung zugegeben wird.

17. Verfahren nach einem der Ansprüche 1 bis 16, **dadurch** gekennzeichnet, dass die Entalkoholisierung des Substrates nach der Fermentation mittels Membranverfahren erfolgt.

18. Verfahren nach einem der Ansprüche 1 bis 17, **dadurch** gekennzeichnet, dass der entalkoholisierte Rohsaft mindestens teilweise in den Fermenter zurückgeführt wird.

19. Verfahren nach einem der Ansprüche 1 bis 18, **dadurch** gekennzeichnet, dass nach der Entalkoholisierung mindestens eine weitere Fermentationsstufe vorgesehen ist.

20. Verfahren nach einem der Ansprüche 1 bis 19**, dadurch** gekennzeichnet, dass das Substrat nach der Entalkoholisierung einer Nachbehandlung unterzogen wird.

21. Verfahren nach einem der Ansprüche 1 bis 20, **dadurch** gekennzeichnet, dass das Substrat nach der Entalkoholisierung geklärt wird.

22. Einrichtung zur Durchführung des Verfahrens nach einem der Ansprüche 1-21, **gekennzeichnet** durch eine zusammenhängende Produktionslinie umfassend Mittel (2, 5) zur physikalischen Behandlung des Substrates zur Befreiung von schädlichen Mikroorganismen, daran anschliessend einen Turmfermenter (3, 30) zur Fermentation des Substrates im Fliessbett-Verfahren, welcher vom Substrat durchströmt wird und inerte, in der Schwebe gehaltene Trägerpartikel (12) mit darauf angeordneten Mikroorganismen sowie ein Rührwerk (13) enthält, an den Turmfermenter (3, 30) anschliessend Mittel (24) zur kontinuierlichen oder semikontinuierlichen mindestens teilweisen Entalkoholisierung sowie Mittel (27, 29) zur weiteren Verarbeitung des Substrates.

23. Einrichtung nach Anspruch 22, **dadurch** gekennzeichnet, dass in der Wandung (16) des Turmfermenters (3, 30) mehrere Auslassöffnungen (20) angeordnet sind, durch welche Trägerpartikel (12) ausschleusbar sind.

24. Einrichtung nach Anspruch 22, **dadurch** gekennzeichnet, dass der für das Zellwachstum und den enzymatischen Glukose- Abbau notwendige Sauerstoff von aussen in den Turmfermenter (3, 30) eingeführt und mit Hilfe eines luftdurchlässigen fein porösen Hohlkörpers, Rohres oder Schlauches (14) im Fermenter blasenfrei verteilt wird.

## Claims

1. Process for manufacturing dealcoholised beverages by fermentation and dealcoholisation of a substrate consisting of fruit or berry juice, sugar-reduced juice, grape must or beer wort, characterised in that, in a continuous production line, the substrate is first freed of harmful microorganisms by a physical treatment and is then fermented by means of beverage-compatible microorganisms and biomass retention, after which it is continuously at least partially dealcoholised and is then advanced for further processing, the entire process running continuously and fermentation being effected by means of immobilised microorganisms in a fermenter operating according to the fluidised bed process.

2. Process according to claim 1, characterised in that the substrate is at least partially dealcoholised by means of a semi-continuously operated dealcoholisation step.

3. Process according to claim 1 or claim 2, characterised in that the substrate is clarified prior to fermentation.

4. Process according to one of claims 1 to 3, characterised in that the substrate is clarified and sterilised by means of microfiltration prior to fermentation.

5. Process according to one of claims 1 to 4, characterised in that the substrate is subjected to pretreatment prior to clarification.

6. Process according to claim 5, characterised in that the pretreatment consists of glucose-oxidase treatment.

7. Process according to one of claims 1 to 6, characterised in that the biomass retention during fermentation is effected by the immobilisation of microorganisms bound to inert carrier material.

8. Process according to claim 7, characterised in that the carrier material for the microorganisms consists of coke, sand or polymer.

9. Process according to one of claims 1 to 8, characterised in that free, i.e. not bound to the support, and dead microorganisms are removed from the fermenter.

10. Process according to claim 9, characterised in that the free and dead microorganisms removed are separated from the product flow by means of microfiltration.

11. Process, especially according to one of claims 1 to 10, characterised in that the microorganisms are removed from the fermenter together with carrier material, the carrier material is freed of microorganisms and is then returned to the fermenter.

12. Process according to one of claims 1 to 11, characterised in that yeasts and/or bacteria are bound to the carrier material.

13. Process according to claim 12, characterised in that bacteria of the strain Zymomonas mobilis are used.

14. Process according to one of claims 1 to 13, characterised in that enzymes are bound to the carrier material in addition to the microorganisms.

15. Process according to claim 14, characterised in that the enzymes bound to the carrier consist of glucose-oxidase enzymes.

16. Process according to one of claims 1 to 15, characterised in that a calcium carbonate or potassium carbonate solution is added to the substrate between clarification and fermentation for acid degradation.

17. Process according to one of claims 1 to 16, characterised in that dealcoholisation of the substrate after fermentation is effected by means of membrane processes.

18. Process according to one of claims 1 to 17, characterised in that the dealcoholised raw juice is at least partially returned to the fermenter.

19. Process according to one of claims 1 to 18, characterised in that at least one further fermentation step is provided after dealcoholisation.

20. Process according to one of claims 1 to 19, characterised in that the substrate is subjected to further treatment after dealcoholisation.

21. Process according to one of claims 1 to 20, characterised in that the substrate is clarified after dealcoholisation.

22. Device for carrying out the process according to one of claims 1 to 21, characterised by a continuous production line including means (2, 5) for the physical treatment of the substrate for freeing it of harmful microorganisms, then a tower fermenter (3, 30) for fermentation of the substrate in the fluidised bed process, said tower fermenter being traversed by the substrate and containing inert carrier particles (12) maintained in suspension with microorganisms arranged thereon and an agitator (13), means (24) following the tower fermenter (3, 30) for continuous or semi-continuous at least partial dealcoholisation and means (27, 29) for further processing of the substrate.

23. Device according to claim 22, characterised in that a plurality of outlet openings (20) through which carrier particles (12) can be removed are arranged in the wall (16) of the tower fermenter (3, 30).

24. Device according to claim 22, characterised in that the oxygen required for cell growth and enzymatic glucose degradation is introduced from the outside into the tower fermenter (3, 30) and is distributed in a bubble-free manner within the fermenter with the aid of an air-permeable finely porous hollow body, pipe or tube (14).

## Revendications

1. Procédé pour la fabrication de boissons désalcoolisées par fermentation et désalcoolisation d'un produit de base constitué par du jus de pomme, de poire ou d'autres fruits ou de baies, par du jus à teneur en sucre réduite, par du moût de raison ou par du moût de brasserie, caractérisé par le fait que le produit de base, dans une ligne de production continue, est tout d'abord débarrassé des micro-organismes nuisibles par un traitement physique, qu'il est ensuite amené à fermenter au moyen de micro-organismes convenant aux boissons et d'une retenue de la biomasse, qu'il est alors désalcoolisé d'une manière continue, et qu'il est ensuite amené à un autre traitement, la totalité du processus se déroulant en continu, et la fermentation au moyen de micro-organismes immobilisés ayant lieu dans un fermenteur qui fonctionne selon le procédé du lit fluidisé.

2. Procédé selon la revendication 1, caractérisé par le fait que le produit de base est désalcoolisé, du moins partiellement, au moyen d'un étage de désalcoolisation à fonctionnement semi-continu.

3. Procédé selon la revendication 1 ou 2, caractérisé par le fait que le produit de base est clarifié avant la fermentation.

4. Procédé selon l'une des revendications 1 à 3, caractérisé par le fait que le produit de base est clarifié avant la fermentation au moyen d'une microfiltration, et qu'il est stérilisé.

5. Procédé selon l'une des revendications 1 à 4, caractérisé par le fait que le produit de base est soumis à un traitement préalable avant la clarification.

6. Procédé selon la revendication 5, caractérisé par le fait que le traitement préalable est constitué par un traitement par des oxydases du glucose.

7. Procédé selon l'une des revendications 1 à 6, caractérisé par le fait que la retenue de la biomasse lors de la fermentation a lieu par immobilisation de micro-organismes qui sont liés à un matériau porteur inerte.

8. Procédé selon la revendication 7, caractérisé par le fait que le matériau porteur destiné aux micro-organismes est constitué par du coke, par din sable ou par un polymère.

9. Procédé selon l'une dès revendications 1 à 8, caractérisé par le fait que l'on évacue du fermenteur les micro-organismes qui sont libres, c'est-à-dire qui ne sont pas liés à un matériau porteur, et ceux qui sont morts.

10. Procédé selon la revendication 9, caractérisé par le fait que les micro-organismes libres et morts qui sont évacués sont séparés de la circulation du produit au moyen d'une microfiltration.

11. Procédé, en particulier selon l'une des revendications 1 à 10, caractérisé par le fait que les micro-organismes sont évacués du fermenteur avec le matériau porteur, et que le matériau porteur est libéré des micro-organismes pour être ramené dans le fermenteur.

12. Procédé selon l'une des revendications 1 à 11, caractérisé par le fait que des levures et/ou des bactéries sont liées au matériau porteur.

13. Procédé selon la revendication 12, caractérisé par le fait que l'on utilise des bactéries de la souche Zymomonas mobilis.

14. Procédé selon l'une des revendications 1 à 13, caractérisé par le fait que des enzymes sont fixées au matériau porteur en plus des micro-organismes.

15. Procédé selon la revendication 14, caractérisé par le fait que les enzymes liées au matériau porteur sont constituées par des oxydases du glucose.

16. Procédé selon l'une des revendications 1 à 15, caractérisé par le fait qu'en vue de diminuer l'acidité, on ajoute au produit de base une solution de carbonate de calcium ou de carbonate de potassium entre la clarification préalable et la fermentation.

17. Procédé selon l'une des revendications 1 à 16, caractérisé par le fait que la désalcoolisation du produit de base a lieu après la fermentation au moyen d'un procédé utilisant des membranes.

18. Procédé selon l'une des revendications 1 à 17, caractérisé par le fait que le jus brut désalcoolisé est ramené dans le fermenteur, du moins partiellement.

19. Procédé selon l'une des revendications 1 à 18, caractérisé par le tait qu'au moins un autre étage de fermentation est prévu après la désalcoolisation.

20. Procédé selon l'une des revendications 1 à 19, caractérisé par le fait que le produit de base est soumis à un traitement ultérieur après la désalcoolisation.

21. Procédé selon l'une des revendications 1 à 20, caractérisé par le fait que le produit de base est clarifié après la désalcoolisation.

22. Dispositif pour la mise en oeuvre du procédé selon l'une des revendications 1 à 21, caractérisé par une ligne de production continue comprenant : des moyens (2, 5) pour le traitement physique du produit de base en vue de le débarrasser des micro-organismes nuisibles, une tour de fermentation (3, 30) qui s'y raccorde pour la fermentation du produit de base selon le procédé du lit fluidisé, qui est parcourue par le produit de base et qui contient des particules porteuses inertes (12) maintenues en suspension sur lesquelles sont fixés des micro-organismes, ainsi qu'un agitateur (13), des moyens (24) qui se raccordent à la tour de fermentation (3, 30) pour la désalcoolisation du moins partielle réalisée d'une manière continue ou semi-continue, ainsi que des moyens (27, 29) pour le traitement ultérieur du produit de base.

23. Dispositif selon la revendication 22, caractérisé par le tait que plusieurs orifices de sortie (20) sont ménagés dans la paroi (16) de la tour de fermentation (3, 30), des particules porteuses (12) pouvant être évacuées à travers ceux-ci.

24. Dispositif selon la revendication 22, caractérisé par le fait que l'oxygène qui est nécessaire pour la croissance des cellules et pour la décomposition du glucose par des enzymes est introduit dans la tour de fermentation (3, 30) depuis l'extérieur, et qu'il est réparti sans bulles dans le fermenteur à l'aide d'un corps creux, d'un tube ou d'un tuyau (14) qui est perméable à l'air et qui présente des pores fins.
